# EUROPÄISCHE PATENTANMELDUNG

(11) **EP 1 811 347 A1**
(43) Veröffentlichungstag der Anmeldung: **25.07.2007**
(21) Anmeldenummer: 06000730.9
(22) Anmeldetag: 13.01.2006
(51) Int. Cl.: G05B 9/02

(54) **Steuerung eines Schaltelements mit einem nachtriggerbaren Monoflop**

(71) Anmelder: SIEMENS AKTIENGESELLSCHAFT, 80333 München (DE)
(72) Erfinder: Briemle, Thomas, 92245 Kümmersbruck (DE)

(57) **Zusammenfassung**

Die Erfindung betrifft eine Schaltungsanordnung (1) mit einem Schaltelement (2) und einer digitalen Ausgangsschaltung (18) und ein Verfahren zum Umschalten eines Schaltelements (2). Um eine derartige Schaltungsanordnung bzw. ein Verfahren zur fehlersichere Ansteuerung zu ermöglichen, wird das Schaltelement (2) mit einem Ausgang eines Monoflops (4) derart verschaltet, dass das Schaltelement (2) durch ein digitales Ausgangssignal des Monoflops (4) umschaltbar ist, und ein Eingang des Monoflops (4) wird mit einem digitalen Ausgang der Ausgangsschaltung (18) verbunden.

## Beschreibung

Die Erfindung betrifft eine Schaltungsanordnung mit einem Schaltelement und einer digitalen Ausgangsschaltung sowie eine Peripheriebaugruppe mit einer solchen Schaltanordnung bzw. ein Verfahren zum Umschalten eines Schaltelements.

Eine hohe Fehlersicherheit ist das entscheidende Kriterium für die funktionale Sicherheit einer Maschine oder Anlage. Im Falle eines Bauteilversagens führen die meisten Fehlerzustände zu einem so genannten "stuck-at". Stuck-at-Fehler (Haftfehler) sind Fehler, bei denen das Signal auf einem bestimmten Wert feststeckt, weil die Signalspannung entweder mit einer Masse oder der positiven Versorgungsspannung verbunden ist. Tritt ein solcher Fehler am Ausgang einer digitalen Ausgangsschaltung einer Baugruppe auf, so kann diese Baugruppe u. U. einen gefährlichen Zustand einnehmen. Insbesondere in sicherheitsgerichteten Anlagen müssen Fehler aller Art erkannt werden und so beherrscht werden, dass sie keine unzulässige Reaktion auslösen. Demzufolge existieren heute verschiedene Fehlererkennungsmaßnahmen und Systemarchitekturen, die zumeist jedoch auf Architekturen mit zwei sich gegenseitig überwachenden Rechnern basieren. Dabei wird die Fehleraufdeckung durch Rücklesen oder zweikanalige Abschaltwege realisiert, d.h. die Fehlersicherheit durch ein Doppelrechnersystem gewährleistet, das sich automatisch überwacht. Eine derartige Systemarchitektur ist üblicherweise kompliziert und kostenintensiv. Auch bei Verwendung von einem einzelnen Rechnersystem können Fehler der durch das Rechnersystem gesteuerten Baugruppen/Vorrichtungen und Fehler, die in dem Rechnersystem selbst auftreten, nicht ausgeschlossen werden .

Der Erfindung liegt die Aufgabe zu Grunde, eine Schaltungsanordnung zur fehlersicheren Ansteuerung zu schaffen und ein Verfahren zur fehlersicheren Ansteuerung zu ermöglichen.

Diese Aufgabe wird durch eine Schaltungsanordnung mit einem Schaltelement, einem nachtriggerbaren Monoflop und einer digitalen Ausgangsschaltung gelöst, wobei das Schaltelement mit einem Ausgang des Monoflops derart verschaltet ist, dass das Schaltelement durch ein digitales Ausgangsignal des Monoflops umschaltbar ist, und wobei ein Eingang des Monoflops mit einem digitalen Ausgang der Ausgangsschaltung verbunden ist.

Diese Aufgabe wird durch ein Verfahren zum Umschalten eines Schaltelements gelöst, wobei das Schaltelement mit einem Ausgang eines nachtriggerbaren Monoflops derart verschaltet wird, dass das Schaltelement durch ein digitales Ausgangsignal des Monoflops umgeschaltet wird, und wobei ein Eingang des Monoflops mit einem digitalen Ausgang der Ausgangsschaltung verbunden wird.

Der Erfindung liegt die Idee zugrunde, ein Schaltelement nicht direkt mit einem Ausgangssignal einer Ausgangsschaltung, sondern indirekt mit einem digitalen Ausgangssignal eines Monoflops anzusteuern, wobei das Monoflop selbst durch ein geeignetes digitales Ausgangssignal der Ausgangsschaltung angesteuert wird. Dafür wird eine Schaltungsanordnung mit einem Schaltelement, einem nachtriggerbaren (retriggerbaren) Monoflop und einer digitalen Ausgangsschaltung aufgebaut. Dabei wird das Schaltelement mit einem Ausgang des Monoflops derart verschaltet, dass das Schaltelement durch ein digitales Ausgangsignal des Monoflops umschaltbar ist. Ein Eingang (auch Takteingang genannt) des Monoflops wird mit einem digitalen Ausgang der Ausgangsschaltung verbunden. Ein nachtriggerbarer Monoflop ist ein monostabiler Kippschalter. Das Schaltelement kann ein elektronischer oder mechanischer Schalter sein, es ist insbesondere zum Ein- und Ausschalten einer Lastvorrichtung vorgesehen und schaltet infolge des Ausgangssignals um. Wenn digitale Signale in geeigneter Weise von der Ausgangsschaltung zur Triggerung des Monoflops dessen Takteingang zugeführt werden, kann das Ausgangssignal des Monoflops stabil bleiben. Dadurch schaltet das Schaltelement nicht um, solange ein entsprechendes digitales Signal am Takteingang anliegt. D.h. unter Einsatz des Monoflops wird das Schaltelement durch die Ausgangsschaltung mit Hilfe vom stabilen Ausgangssignal des Monoflops indirekt angesteuert.

Gemäß einer vorteilhaften Ausgestaltung der Erfindung kann mit der digitalen Ausgangsschaltung ein Signal mit High-Pegel in eine Reihe von Impulsen umgewandelt werden, wobei die Periodendauer jedes Impulses kürzer als eine Zeitkonstante des Monoflops ist. Die Zeitkonstante wird auch als Haltezeit genannt. Diese Reihe von Impulsen kann dann von dem digitalen Ausgang der Ausgangsschaltung ausgegeben und zur Triggerung des Monoflops diesem zugeführt werden. Beim Anlegen eines Impulses an dem Eingang (Takteingang) des Monoflops kippt es für eine definierte Zeit (welche üblicherweise Haltezeit oder Zeitkonstante genannt wird) um und erzeugt ein Rechtecksignal an seinem Ausgang. Nach der Haltezeit geht der Monoflop in seinen Ursprungszustand zurück. D.h. der von dem Monoflop erzeugte Impuls wird verlängert, wenn während der Laufzeit des Impulses eine Reihe von Impulsen als Triggerimpulse am Eingang des Monoflops eintrifft. Die Haltezeit des Monoflops zählt dann also nicht vom ersten, sondern vom letzten Triggerimpuls an. Bei Eintritt einer Reihe von Impulsen an seinem Takteingang ist das Ausgangsignal des Monoflops mit einem stabilen Signalpegel ständig aktiviert, sofern die Haltezeit länger ist als die Periodendauern der Impulse. Somit kann das Schaltelement auch in einem stabilen Schaltzustand bleiben, es sei denn, dass die Periodendauer eines Impulses länger als die Zeitkonstante des Monoflops ist. Ein damit erzielter Vorteil besteht insbesondere darin, dass eine fehlersichere Ansteuerung des Schaltelements jederzeit gewährleistet werden kann, auch wenn ein Stuck-at-Fehler auftritt, bei dem ein ungewollt langer High-Pegel am Takteingang des Monoflops geliefert wird.

Als Alternative oder zur Erweiterung von dem oben genannten Fall kann eine Reihe von Impulsen auch von einer Recheneinheit lieferbar sein, wobei die Periodendauer jedes Impulses ebenfalls kürzer als eine Zeitkonstante des Monoflops ist.

Vorteilhafterweise wird ein Signal an einem Ausgang des Schaltelements zur digitalen Ausgangsschaltung zurückgeführt. Dabei kann diese Zufuhr entweder direkt oder durch die Recheneinheit indirekt an die Ausgangsschaltung gebracht werden. Das ist besonderes sinnvoll, wenn eine Lastvorrichtung an dem Ausgang angeschlossen ist. D.h. die Zustände der Lastvorrichtung oder Schaltanordnung werden überwacht. Dann sind Fehler, insbesondere Kurzschlüsse und Unterbrechungen, aufdeckbar bzw. erkennbar, gleichgültig ob sie in der Lastvorrichtung oder in der Schaltungsanordnung auftreten.

Gemäß einer weiteren vorteilhaften Ausgestaltung der Erfindung ist die Schaltungsanordnung Teil eines sicherheitsgerichteten Automatisierungssystems. Durch den Einsatz der Schaltungsanordnung kann die Sicherheit eines solchen Automatisierungssystems noch weiter erhöht werden.

Eine derartige Schaltungsanordnung kann ebenfalls in einer Peripheriebaugruppe eines industriellen Automatisierungssystems eingesetzt werden. Damit kann die komplette Peripheriebaugruppe im Fehlerfall unmittelbar ausgeschaltet und nach der Behebung von Störung weitergeführt werden. Insbesondere bei Peripheriebaugruppen ist eine kostengünstige Ausführung entscheidend, welche durch den einfachen Aufbau der hier vorgeschlagenen Schaltungsanordnung ermöglicht wird.

Die Erfindung wird im Folgenden im Rahmen der Ausführungsbeispiele anhand der Figuren näher dargestellt. Es zeigen:
- FIG 1:: ein herkömmliches Sicherheitssystem, und
- FIG 2:: den schematischen Aufbau eines Beispiels einer erfindungsgemäßen Schaltungsanordnung.

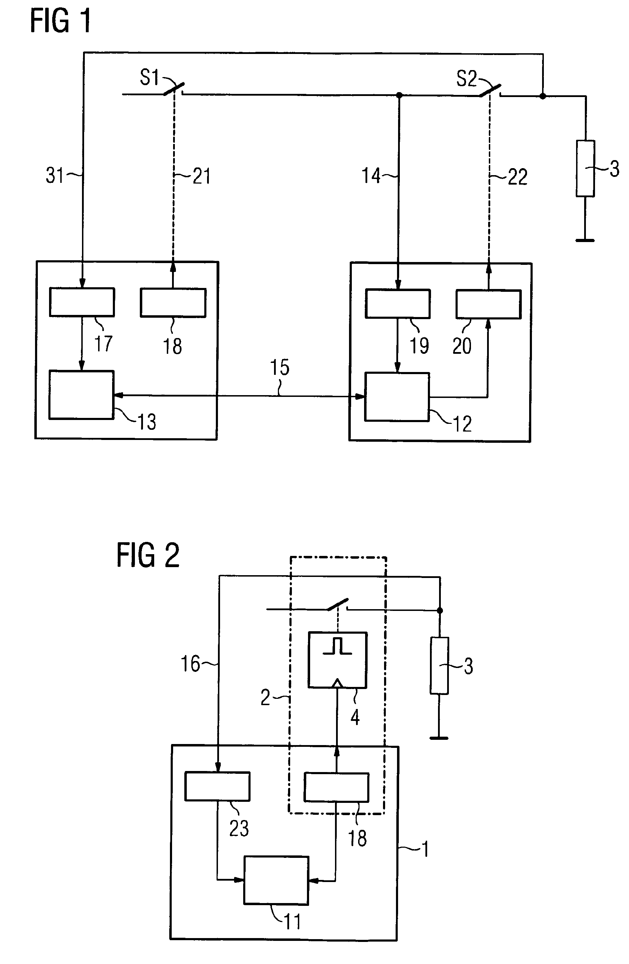

Das in FIG 1 gezeigte herkömmliche Sicherheitssystem basiert auf Architekturen mit zwei sich gegenseitig überwachenden Mikrokontrollern (µC) 12 und 13. Die zwei Mikrokontroller 12 und 13 werden mittels einer zyklischen Synchronisationsüberwachung 15 miteinander kombiniert. Zudem sind jeweils eine Eingangsschaltung 17, 19 und eine Ausgangsschaltung 18, 20 mit den Mikrokontrollern 12 und 13 verschaltet. Zwei Schaltelemente in Form der Schalter S2 und S1 sind zum Ein- und Ausschalten einer Lastvorrichtung 3 vorgesehen. Die Zustandsdaten der Lastvorrichtung 3 und des Schalter S2 werden zur Fehleraufdeckung durch einen Regelkreis 31 (auch durch z.B. eine Rückleseneinrichtung möglich) zur Eingangsschaltung 17 zurückgeführt, während der Zustand des Schalters S1 mittels eines Regelkreises 14 (ebenfalls z.B. durch eine Rückleseneinrichtung möglich) für den µC 12 erkennbar ist. Damit überwacht der µC 13 und der µC 12 jeweils die Lastvorrichtung 3, den Schalter S2 und den Schalter S1. Im Normalbetrieb bleiben die zwei Schalter S1 und S2 zugeschaltet. Zur Umschaltung der Schalter S2 bzw. S1 werden jeweils zwei Ansteuerungen 22 bzw. 21 aufgebaut. Eine solche Ansteuerung kann eine Drahtverbindung oder drahtlose Verbindung sein.

Wird der Schalter S1 fehlerbedingt durchgeschaltet, so wird dieser Fehler entweder durch den Regelkreis 31 oder 14 aufgedeckt und der µC 12 wird über das Abschalten des Schalters S2 den sicheren Zustand herbeiführen. Falls µC 13 fehlerbedingt stehen bleibt und dadurch der Schalter S1 fehlerbedingt durchgeschaltet wird, kann µC 12 diesen Fehler durch die zyklische Synchronisationsüberwachung 15 aufdecken und über die Ansteuerung 22 den Schalter S2 abschalten. Dadurch kann die Lastvorrichtung 3 bei Auftreten einer kritischen Situation in einen sicheren Zustand versetzt werden und in einem sicheren Zustand bleiben.

In einem solchen herkömmlichen System werden Mikrokontroller, Bus und Schalter doppelt gebraucht, und es ist zusätzlich eine zyklische Synchronisationsüberwachung 15 notwendig. Eine derartige Systemarchitektur ist kompliziert und kostenintensiv. Wegen mehrerer eingesetzter Bauteile können Fehler öfter auftreten, und es kann die Sicherheit des Systems negativ beeinflusst werden.

In FIG 2 wird ein Beispiel einer erfindungsgemäßen fehlersicheren Schaltungsanordnung dargestellt, wobei die Schaltungsanordnung eine Ausgangsschaltung 18, ein nachtriggerbares Monoflop 4 und ein Schaltelement 2 umfasst. Das Schaltelement 2 ist zur Ein- und Ausschaltung einer Lastvorrichtung 3, die an einen Ausgang des Schaltelements 2 angeschlossen ist, vorgesehen und soll im Normalbetrieb zugeschaltet bleiben. Ein Eingang (Takteingang) des Monoflops 4 ist mit einem Ausgang der Ausgangschaltung 18 verbunden. Das Schaltelement 2 wird durch das nachtriggerbare Monoflop 4 gesteuert, wobei hier notwendige Triggerimpulse (eine Reihe von Impulsen) beispielsweise vom µC 11 erzeugt und am Takteingang des Monoflops 4 zugeliefert werden. Signale an dem Ausgang des Schaltelements 2 werden durch einen Rückregelkreis 16 zu einer Eingangsschaltung 23 geleitet, d.h. die Zustände der Lastvorrichtung 3 oder des Schaltelements 2 zur Fehleraufdeckung können von dem µC 11 überwacht werden.

Bei Normalbetrieb wird der Monoflop 4 so getriggert, dass die Triggerimpulse schneller kommen als die Haltezeit des Monoflops 4 abläuft. D.h. die Periodendauer jedes Triggerimpulses soll kürzer als die Zeitkonstante des Monoflops 4 sein. Die Haltezeit zählt also nicht vom ersten, sondern vom aktuellen Triggerimpuls an. Das Ausgangsignal des Monoflops 4 ist konstant auf High-Pegel, dadurch bleibt das Schaltelement 2 immer zugeschaltet. Unter anderem ist es zu erwähnen, dass die Periodendauern der Impulse entweder manuell oder automatisch änderbar sind. Damit können verschiedene Monoflops geeignet sein, wenn eine derartige Schaltungsanordnung flexibel in mehreren Bereichen verwendet wird. Die Periodendauer begrenzt üblicherweise die Reaktionsgeschwindigkeit und soll ausreichend klein gewählt werden. Tritt ein Fehler an der Vorrichtung 3 auf und wird der Fehler vom µC 11 aufgedeckt, generiert der µC 11 die Triggerimpulse nicht mehr, womit das Schaltelement 2 spätestens nach Ablauf der Haltezeit ausschaltet. Auch wenn es einen so genannten Stuck-at-Fehler am digitalen Ausgang der Ausgangsschaltung gibt, d. h. insbesondere, wenn die Spannung dort fehlerhaft High-Pegel aufweist, oder der µC 11 selbst fehlerbedingt stehen bleibt, fallen Triggerimpulse bei dem Takteingang des Monoflops 4 ebenfalls aus. Nach Ablauf der Zeitkonstante geht das Ausgangssignal des Monoflops 4 auf Low-Pegel, demzufolge schaltet sich das Schaltelement 2 ab. Die Vorrichtung 3 bleibt im sicheren Zustand. Nachdem der Fehler beseitigt worden ist, kann der µC 11 wieder Triggerimpulse erzeugen und an dem Takteingang des Monoflops 4 zuliefern. Damit kippt der Monoflop 4 und sein Ausgangsignal hat High-Pegel. Das Schaltelement 2 schaltet sich dementsprechend wieder ein. Die Lastvorrichtung 3 läuft wieder im Normalbetrieb.

Im Vergleich zu dem herkömmlichen System in FIG 1 werden hier nur ein Mikrokontroller (µC) 11 und ein Schaltelement 2 gebraucht, d.h. die Kosten für den Aufbau und Einsatz der Schaltungsanordnung sind günstiger. Eine derartige Schaltungsanordnung 1 kann auf einen aufgetretenen Fehler schnell reagieren und sich unmittelbar in einen sicheren Zustand schalten bzw. darin verbleiben. Dadurch kann die Vorrichtung 3 zuverlässig angesteuert werden und die erforderliche Sicherheit gewährleistet werden.

## Patentansprüche

1. Schaltungsanordnung (1) mit einem Schaltelement (2), einem nachtriggerbaren Monoflop (4) und einer digitalen Ausgangsschaltung (18), wobei das Schaltelement (2) mit einem Ausgang des Monoflops (4) derart verschaltet ist, dass das Schaltelement (2) durch ein digitales Ausgangssignal des Monoflops (4) umschaltbar ist, und wobei ein Eingang des Monoflops (4) mit einem digitalen Ausgang der Ausgangsschaltung (18) verbunden ist.

2. Schaltungsanordnung (1) nach Anspruch 1,
**dadurch gekennzeichnet , dass** die digitale Ausgangsschaltung (18) zur Umwandlung eines Signals mit High-Pegel in eine Reihe von Impulsen vorgesehen ist, wobei diese Reihe von Impulsen von dem digitalen Ausgang der Ausgangsschaltung (18) ausgebbar ist, und wobei die Periodendauer jedes Impulses kürzer als eine Zeitkonstante des Monoflops (4) ist.

3. Schaltungsanordnung (1) nach Anspruch 1,
**dadurch gekennzeichnet, dass** die Ausgangsschaltung (18) zur Ausgabe eines von einer Recheneinheit (11) gelieferten Signals vorgesehen ist.

4. Schaltungsanordnung (1) nach Anspruch 3,
**dadurch gekennzeichnet , dass** eine Reihe von Impulsen von der Recheneinheit (11) lieferbar ist, wobei die Periodendauer jedes Impulses kürzer als eine Zeitkonstante des Monoflops (4) ist.

5. Schaltungsanordnung (1) nach einem der vorherigen Ansprüche,
**dadurch gekennzeichnet, dass** ein Signal an einem Ausgang des Schaltelements (2) zur digitalen Ausgangschaltung (18) rückführbar ist.

6. Schaltungsanordnung (1) nach einem der vorherigen Ansprüche,
**dadurch gekennzeichnet , dass** die Schaltungsanordnung (1) Teil eines sicherheitsgerichteten Automatisierungssystems ist.

7. Peripheriebaugruppe eines industriellen Automatisierungssystems mit einer Schaltungsanordnung (1) nach einem der Ansprüche 1 bis 6.

8. Verfahren zum Umschalten eines Schaltelements (2), wobei das Schaltelement (2) mit einem Ausgang eines nachtriggerbaren Monoflops (4) derart verschaltet wird, dass das Schaltelement (2) durch ein digitales Ausgangssignal des Monoflops (4) umgeschaltet wird, und wobei ein Eingang des Monoflops (4) mit einem digitalen Ausgang der Ausgangsschaltung (18) verbunden wird.

9. Verfahren nach Anspruch 8,
**dadurch gekennzeichnet, dass** die digitale Ausgangsschaltung (18) zur Umwandlung eines Signals mit High-Pegel in eine Reihe von Impulsen vorgesehen wird, wobei diese Reihe von Impulsen von dem digitalen Ausgang der Ausgangsschaltung (18) ausgegeben wird, und wobei die Periodendauer jedes Impulses kürzer als eine Zeitkonstante des Monoflops (4) eingestellt wird.

10. Verfahren nach Anspruch 8,
**dadurch gekennzeichnet, dass** die Ausgangsschaltung (18) zur Ausgabe eines von einer Recheneinheit (11) gelieferten Signals vorgesehen wird.

11. Verfahren nach Anspruch 10,
**dadurch gekennzeichnet, dass** eine Reihe von Impulsen von der Recheneinheit (11) geliefert wird, wobei die Periodendauer jedes Impulses kürzer als eine Zeitkonstante des Monoflops (4) eingestellt wird.

12. Verfahren nach einem der Ansprüche 8 bis 11,
**dadurch gekennzeichnet , dass** ein Signal an einem Ausgang des Schaltelements (2) zur digitalen Ausgangschaltung (18) zurückgeführt wird.
